# EUROPEAN PATENT APPLICATION

(11) **EP 4 471 497 A2**
(43) Date of publication of application: **04.12.2024**
(21) Application number: 24174978.7
(22) Date of filing: 08.05.2024
(51) Int. Cl.: G02F 1/1335, G02F 1/1337, G02F 1/1506

(54) **OPTICAL DEVICES AND METHODS FOR ADJUSTABLE LIGHT ATTENUATION BASED ON OPTICAL SCATTERING**

(30) Priority: 11.05.2023 US 202363501665 P; 03.05.2024 US 202418655137
(71) Applicant: Meta Platforms Technologies, LLC, Menlo Park, CA 94025 (US)
(72) Inventor: Sears, Jasmine Soria, Menlo Park, 94025 (US); Leard, Francis Lawrence, Menlo Park, 94025 (US); Barykina-tassa, Olga Vladimirovna, Menlo Park, 94025 (US); Valentine, Gareth John, Mnelo Park, 94025 (US); Wu, Xi, Menlo Park, 94025 (US)
(74) Representative: Murgitroyd & Company

(57) **Abstract**

An optical device includes an optically dimmable filter for providing a first set of scattering properties while the optically dimmable filter is in a first state and providing a second set of scattering properties while the first optically dimmable filter is in a second state. The optically dimmable filter also includes (i) a substrate with a plurality of surface features characterized by a first refractive index; (ii) a first set of one or more electrodes; (iii) a second set of one or more electrodes; and (iv) a medium having a second refractive index while the first optically dimmable filter is in a first state and a third refractive index distinct from the second refractive index while the first optically dimmable filter is in the second state. The first refractive index is closer to the second refractive index than the third refractive index.

## Description

### TECHNICAL FIELD

This application relates generally to optical devices and, more specifically, to optical devices that provide dimming effects based on controlled light scattering.

### BACKGROUND

Electro-optic devices are widely used in optical applications. By changing the optical properties of a material, electro-optic devices can modulate light based on applied electrical signals. Examples of electro-optics devices include electrochromic devices, which utilize electrochromic materials that change their color in response to an electrical signal.

### SUMMARY

Electrochromic devices have been used to provide dimming effects (e.g., attenuation of the transmitted light). However, electrochromic devices including dichroic dyes have a color tint even when such devices are in a state for providing a low absorption. This limits the dynamic range of such devices.

Such challenges and other limitations may be alleviated by optical devices and methods based on controlled optical scattering.

According to a first aspect, there is provided an optical device, comprising: a first optically dimmable filter for providing a first set of scattering properties while the first optically dimmable filter is in a first state and providing a second set of scattering properties while the first optically dimmable filter is in a second state distinct from the first state, wherein the first set of scattering properties is distinct from the second set of scattering properties..

The first optically dimmable filter may include a substrate with a plurality of surface features. The plurality of surface features may be characterized by a first refractive index. The first optically dimmable filter may include a first set of one or more electrodes; a second set of one or more electrodes distinct and separate from the first set of one or more electrodes; and a medium having a second refractive index while the first optically dimmable filter is in a first state and a third refractive index distinct from the second refractive index while the first optically dimmable filter is in the second state. The first refractive index may be closer to the second refractive index than the third refractive index.

The plurality of surface features may be reflectively asymmetric with respect to any diagonal line of reflection.

A respective surface feature of the plurality of surface features may have a shape of a prism extending along a surface of the substrate.

The device may further comprise: one or more processors coupled with the first optically dimmable filter for activating or deactivating the first optically dimmable filter; and memory storing instructions for execution by the one or more processors, the stored instructions including instructions for providing a first electrical signal between the first set of one or more electrodes and the second set of one or more electrodes at a first time to activate the first optically dimmable filter and providing a second electrical signal distinct from the first electrical signal between the first set of one or more electrodes and the second set of one or more electrodes at a second time mutually exclusive to the first time to deactivate the first optically dimmable filter.

The plurality of surface features may cause scattering of incident light by a first degree while the first optically dimmable filter is in the second mode and causes scattering of the incident light by a second degree less than the first degree while the first optically dimmable filter is in the first mode.

The first optically dimmable filter may include a liquid crystal phase grating cell.

The first set of scattering properties may include a first scattering cross-section for a visible wavelength and a second scattering cross-section less than the first scattering cross-section for a near-infrared wavelength. The second set of scattering properties may include a third scattering cross-section less than the first scattering cross-section for the visible wavelength and a fourth scattering cross-section substantially similar to the second scattering cross-section for the near-infrared wavelength.

The first set of scattering properties may include a first scattering cross-section for a visible wavelength and a second scattering cross-section greater than the first scattering cross-section for a near-infrared wavelength. The second set of scattering properties may include a third scattering cross-section substantially similar to the first scattering cross-section for the visible wavelength and a fourth scattering cross-section less than the second scattering cross-section for the near-infrared wavelength.

The first set of scattering properties may include a first scattering cross-section for a visible wavelength and a second scattering cross-section for a near-infrared wavelength. The second set of scattering properties may include a third scattering cross-section less than the first scattering cross-section for the visible wavelength and a fourth scattering cross-section less than the second scattering cross-section for the near-infrared wavelength.

The device may comprise an array of optically dimmable filters including the first optically dimmable filter. Each optically dimmable filter of the array of optically dimmable filters may be independently activatable.

The device may further comprise: one or more processors coupled with the array of optically dimmable filters for activating or deactivating one or more optically dimmable filters of the array of optically dimmable filters; and memory storing instructions for execution by the one or more processors, the stored instructions including instructions for, in accordance with a determination that a subset, less than all, of the array of optically dimmable filters is in the first state, placing the rest of the optically dimmable filters of the array of optically dimmable filters in a third state. A respective optically dimmable filter of the array of optically dimmable filters may provide a third set of scattering properties while the respective optically dimmable filter is in the third state. The respective optically dimmable filter in the first state may provide a first transmittance. The respective optically dimmable filter in the second state may provide a second transmittance greater than the first transmittance. The respective optically dimmable filter in the third state may provide a third transmittance greater than the first transmittance and less than the second transmittance.

The device may further comprise: a second optically dimmable filter that includes: a third set of one or more electrodes; a fourth set of one or more electrodes distinct and separate from the third set of one or more electrodes; and an electrolyte containing metal ions. The electrolyte may be located between the third set of one or more electrodes and the fourth set of one or more electrodes. The second optically dimmable filter may be positioned relative to the first optically dimmable filter so that the second optically dimmable filter receives light that has been transmitted through the first optically dimmable filter or the first optically dimmable filter receives light that has been transmitted through the second optically dimmable filter.

According to a second aspect, there is provided a wearable display device, comprising: a display; and the optical device of the first aspect, wherein the display is positioned to receive light transmitted through the optical device.

According to a third aspect, there is provided a method performed by an electrical device that includes one or more processors and memory storing instructions for execution by the one or more processors and is coupled with a first optically dimmable filter, the method comprising: providing a first electrical signal to place the first optically dimmable filter in a first state for providing a first set of scattering properties; and providing a second electrical signal distinct from the first electrical signal to place the first optically dimmable filter is in a second state distinct from the first state for providing a second set of scattering properties, wherein the first set of scattering properties is distinct from the second set of scattering properties.

The disclosed optical devices and methods may replace conventional optical devices and methods. The disclosed optical devices and methods may complement conventional optical devices and methods.

### BRIEF DESCRIPTION OF THE DRAWINGS

For a better understanding of the various described aspects, reference should be made to the Detailed Description below, in conjunction with the following drawings in which like reference numerals refer to corresponding parts throughout the figures.
Figures 1A and 1B are schematic diagrams illustrating an augmented reality display.
Figures 2A and 2B are schematic diagrams illustrating an optical device.
Figures 3A and 3B are schematic diagrams illustrating an optical device.
Figure 4 is a schematic diagram illustrating an optical device.
Figures 5A and 5B are schematic diagrams illustrating optical devices.
Figures 6A and 6B are schematic diagrams illustrating an optical device.
Figure 7 is a perspective view of a display device.
Figure 8 is a block diagram of a system including a display device.
Figure 9 is an isometric view of a display device.
Figure 10 is a flowchart for operating a display device.
These figures are not drawn to scale unless indicated otherwise.

### DETAILED DESCRIPTION

As described above, electrochromic devices including dichroic dyes have a color tint even when such devices are in a state for providing a low absorption. This limits the dynamic range of such devices. In addition, the attenuation (e.g., <0.1% optical transmittance) provided by such devices may not sufficiently dim the view of an outside world especially when such devices are located in a bright environment. Thus, there is a need for optical devices that can attenuate light (e.g., dimming devices) with reduced color tint and greater attenuation (i.e., lower optical transmittance).

Optical devices that adjust the transmittance by changing optical scattering properties alleviate such challenges. Such optical devices may be used in wearable display devices, such as augmented reality or mixed reality devices. By selectively dimming the transmission of the visible light from the environment (e.g., the outside world), the visibility of displayed content (e.g., augmented reality content or mixed reality content) is increased. In addition, such optical devices may be used in conjunction with other dimming devices (e.g., dimming devices based on electrochromism or spatial light modulators).

Reference will now be made to various examples which are illustrated in the accompanying drawings. In the following description, numerous specific details are set forth in order to provide an understanding of the various described aspects. However, it will be apparent to one of ordinary skill in the art that the various described aspects may be practiced without these specific details. In other instances, well-known methods, procedures, components, circuits, and networks have not been described in detail so as not to unnecessarily obscure aspects of the disclosure.

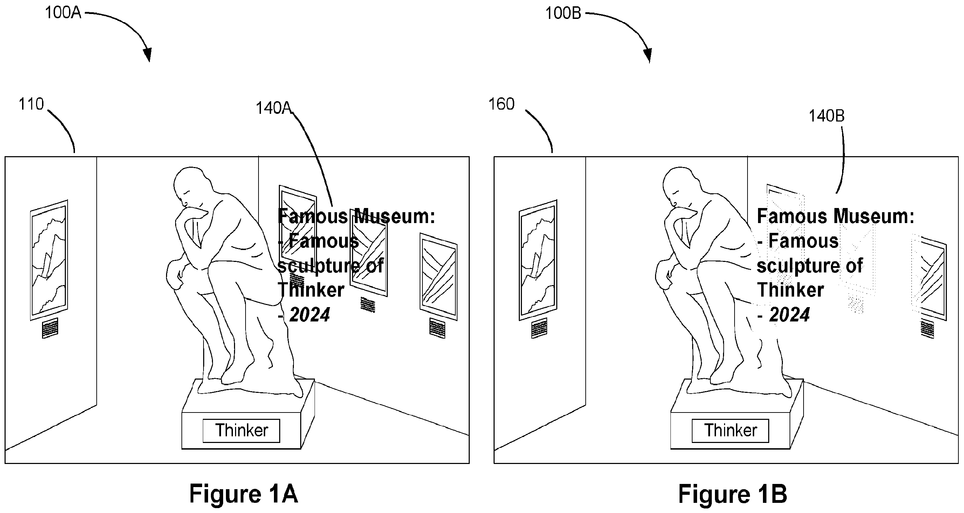

Figures 1A and 1B are schematic diagrams illustrating augmented reality displays 100A and 100B as seen from the viewpoint of a user. Figure 1A shows an augmented reality display 100A with a view 110 of a sculpture (e.g., "Thinker") in a museum as seen by a user of an augmented reality device. The augmented reality display 100A includes an augmented reality informational overlay 140A for the sculpture as seen by the user of the augmented reality device. The information overlay 140A (e.g., "Famous Museum: Famous sculpture of Thinker," "2024," etc.) is hard to see over a cluttered background (e.g., a background with high contrast and having spatial frequencies similar to the spatial frequencies in the augmented reality content, such as paintings and labels illustrated in Figure 1A).

Figure 1B shows an augmented reality display 100B with a view 160 of the sculpture (e.g., "Thinker") in the museum as seen by the user of an augmented reality device (e.g., an augmented reality device different from the augmented reality device of Figure 1A or the same augmented reality device in a different mode). The augmented reality display 100B includes an augmented reality information overlay 140B for the sculpture as seen by the user of the augmented reality device. The information overlay 140B (e.g., "Famous Museum: Famous sculpture of Thinker," "2024," etc.) is displayed over a contrast-reduced region and as a result, is clearly visible even over a cluttered background view. The contrast-reduced region for the information overlay 140B is created by an optical dimming device (e.g., an optical dimming filter, a scattering-based dimming device, etc.) that modulates a set of scattering properties associated with the augmented reality display 100B to improve the visibility of artificial reality (e.g., augmented reality, mixed reality, etc.) content, such as that of the information overlay 140B, by modulating the (total) optical transmittance of the optical dimming device.

In some examples, the scattering of visible wavelengths of light results in an opaque-but-not-dark effect that improves the visibility of augmented reality information overlays without compromising a viewer's ability to perceive the outside world in a functional way. For example, a scattering-based dimming device can reduce the spatial frequencies of light from the environment (e.g., blurring the features in the environment that would be visible in the absence of the scattering-based dimming) that interfere with the visibility of the augmented reality content.

In some examples, an optical dimming device based on light scattering may be integrated with an absorptive dimming device. In some other examples, an optical dimming device based on light scattering is used without an absorptive dimming device. In some configurations, optical dimming devices that are not integrated with an absorptive dimming device provide an optical transmission greater than that of an absorption-based dimming device.

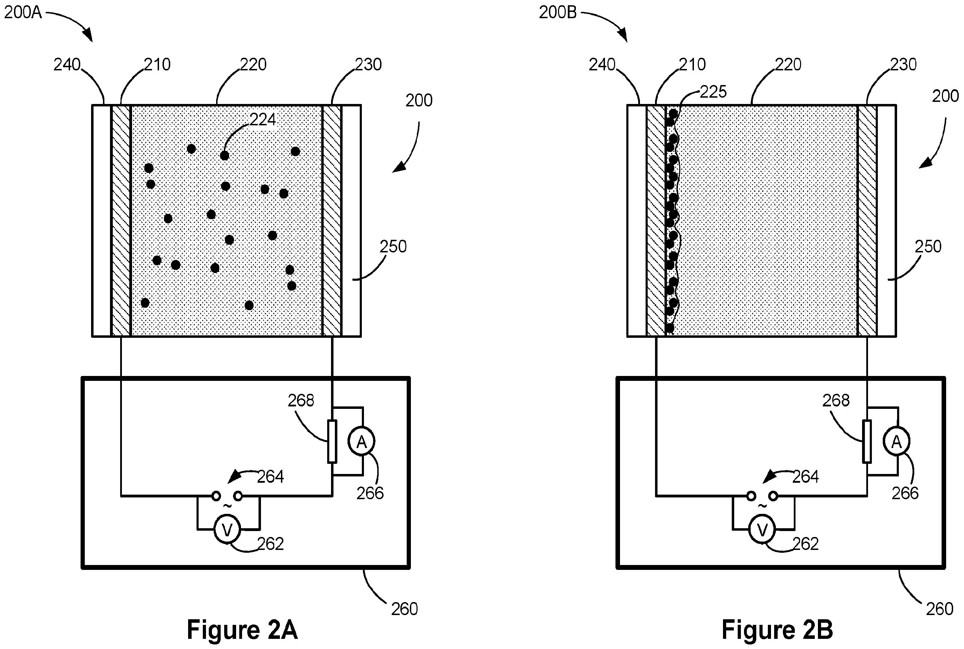

In some examples, modulation of absorption properties of optical dimming devices is accomplished by forming, removing, and/or varying formation of a textured surface based on electroplating as described with respect to Figures 2A and 2B below.

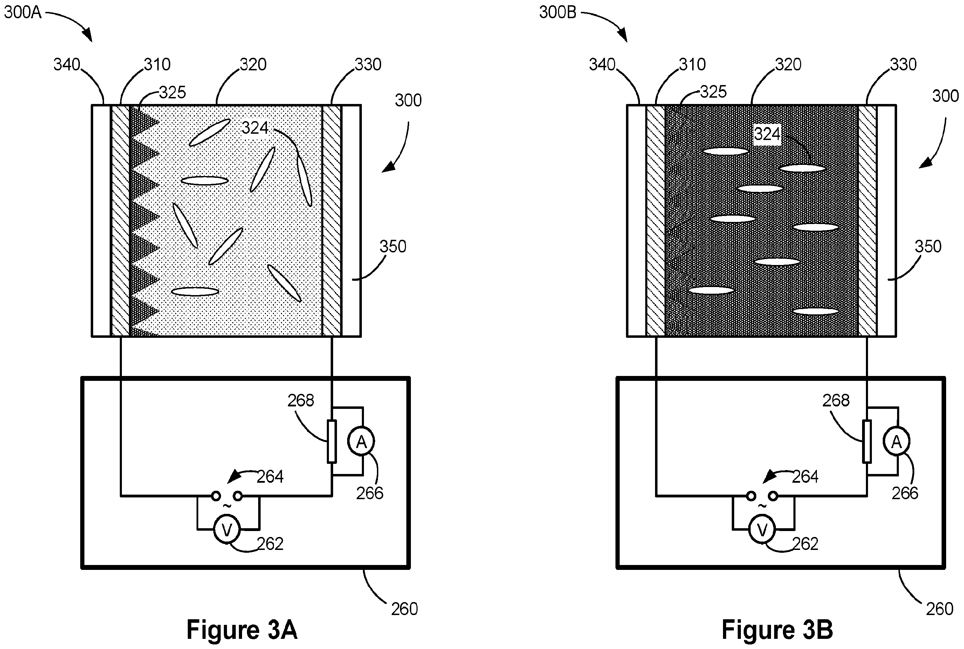

In some examples, modulation of the scattering properties of optical dimming device can be accomplished by changing refractive indices associated with an optical dimming filter as described with respect to Figures 3A and 3B below.

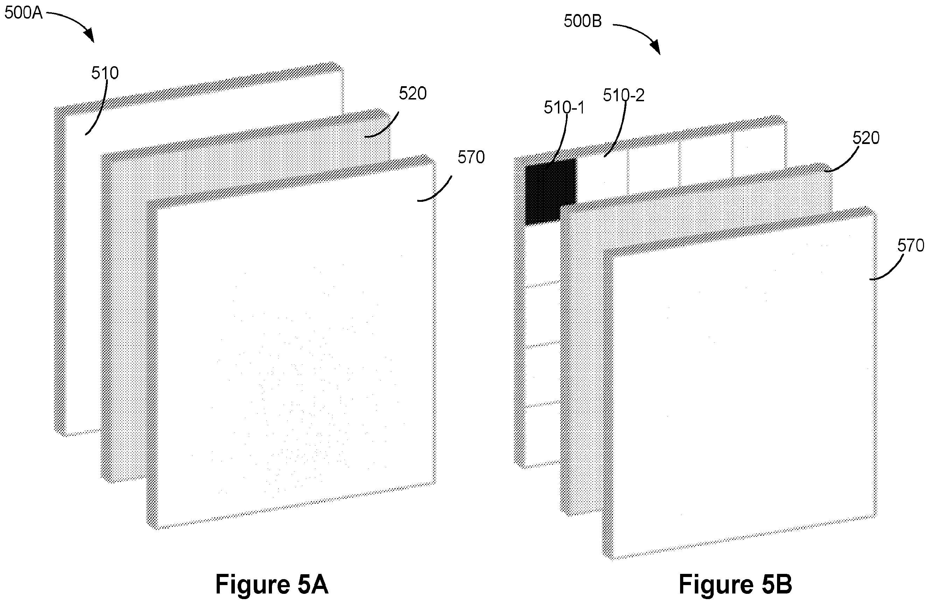

In some examples, the optical dimming device includes one switchable region (e.g., the entire display region, or a substantial portion thereof, is switchable) as described with respect to Figure 5A. In some examples, the optical dimming device includes a plurality of pixels that are individually switchable (e.g., respective pixels can be activated to provide light scattering independently from the rest of the pixels) as described with respect to Figure 5B.

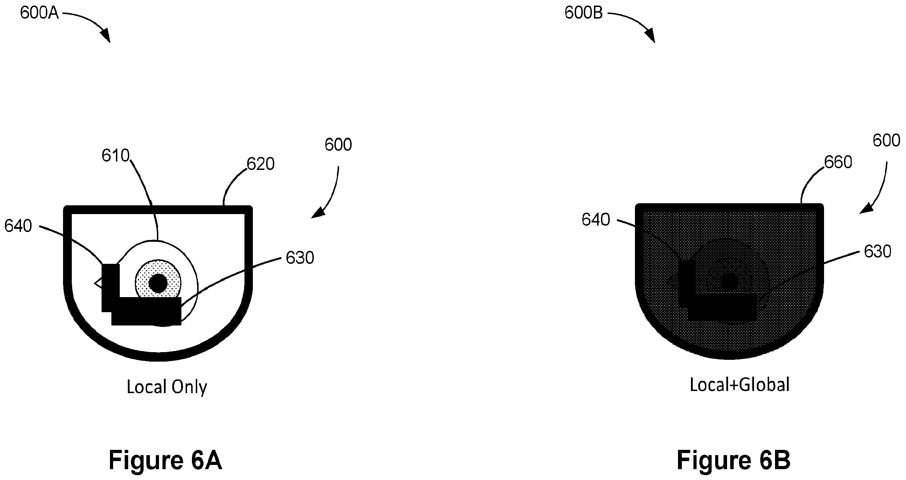

In some examples, the optical dimming device is configured for providing localized switching regions (e.g., a plurality of switching regions that individually or together do not encompass the entire display region) as described with respect to Figure 6A. In some examples, the optical dimming device is configured for providing one or more combinations of localized switching regions and global switching (e.g., the entire display region, or a substantial portion thereof, is switchable) as described with respect to Figure 6B.

In some examples, the optical dimming device is configured to scatter light within a particular wavelength range (and not for light outside the particular wavelength range). In some examples, multiple scattering-based optical dimming devices configured for different wavelength ranges are used in conjunction (e.g., a stack of multiple scattering-based optical filter devices with different wavelength ranges).

In some examples, the optical dimming device is configured to scatter light within a particular range of incident angles (and not for light outside the particular range of incident angles). In some examples, multiple optical dimming devices configured for different ranges of incident angles are used in conjunction (e.g., a stack of multiple scattering-based optical filter devices with different ranges of incident angles).

In some examples, a head-mounted device (e.g., an augmented reality headset) includes a scattering-based optical filter device. In some examples, a display device (e.g., a computer screen, such as a laptop screen or a monitor, or a television) includes a scattering-based optical filter device (e.g., as a privacy screen).

In some examples, the optically dimmable device is operated in two or more states (e.g., an "on" state and an "off" state). In some examples, a degree of opaqueness of the optically dimmable device, while in the on state, is based on the operating parameters (e.g., electrical signals, voltages, photoacoustic pulse generation, etc.) and/or configuration of a scattering region of the first optically dimmable filter.

For example, the optically dimmable filter can provide (i) a first transmittance (e.g., a high transmittance, such as 100%, 99.9%, 99%, 98%, 97%, 96%, 95%, 90%, 85%, 80%, 75%, 70%, 65%, 60%, 55%, or 50%, or within an interval between any two of the aforementioned values) while the optically dimmable filter is in a first state and (ii) a second transmittance (e.g., a low transmittance, such as 0%, 0.1%, 1%, 2%, 3%, 4%, 5%, 10%, 15%, 20%, 25%, 30%, 35%, 40%, 45%, or 49%, or within any interval between any two of the aforementioned values) while the optically dimmable filter is in a second state. In some examples, the first transmittance is a first total transmittance. In some examples, the second transmittance is a second total transmittance.

In another example, the optically dimmable filter can provide (i) a first set of scattering properties (e.g., a high scattering, such as 100%, 99.9%, 99%, 98%, 97%, 96%, 95%, 90%, 85%, 80%, 75%, 70%, 65%, 60%, 55%, or 50% of incoming light being scattered, or within an interval between any two of the aforementioned values) while the optically dimmable filter is in a first state and (ii) a second set of scattering properties (e.g., a low scattering, such as 0%, 0.1 %, 1%, 2%, 3%, 4%, 5%, 10%, 15%, 20%, 25%, 30%, 35%, 40%, 45%, or 49%, or within any interval between any two of the aforementioned values of the incoming light being scattered) while the optically dimmable filter is in a second state.

Figures 2A and 2B are schematic diagrams illustrating two modes 200A and 200B of operation for an optical device 200 (or a portion of the optical device that operates as a dimmable filter).

The optical device 200 includes a first electrode 210. The first electrode 210 may provide an electrical field to a medium 220 located adjacent to the first electrode 210.

Figures 2A and 2B also show that the optical device 200 includes a second electrode 230. In some examples, the second electrode 230 is distinct and separate from the first electrode 210.

The optical device 200 also includes a first substrate 240. In some examples, the first substrate 240 is located adjacent to the first electrode 210 (e.g., the first electrode 210 is located adjacent to the first substrate 240).

In some examples, the first electrode 210 and the second electrode 230 are transparent electrodes. For example, the first electrode 210 and the second electrode 230 are transparent to visible wavelengths of light. In some examples, the first electrode 210 and the second electrode 230 are based on transparent conductive oxide (TCO) materials (e.g., indium tin oxide (ITO), fluorine doped tin oxide (FTO), or fluorine doped zinc oxide (FZO), etc.). In some examples, the first electrode and the second electrode are based on carbon nanotubes and/or graphene.

Figures 2A and 2B also show that the optical device 200 further includes a second substrate 250. In some examples, the second substrate 250 is located adjacent to the second electrode 230 (e.g., the second electrode 230 is also located adjacent to the second substrate 250).

In some examples, the first substrate 240 and/or the second substrate 250 are made of, or include, an optically transparent material, such as glass or optically transparent plastic (e.g., polyethylene terephthalate (PET)).

In some examples, the second substrate 250 is distinct and separate from the first substrate 240. This allows the first substrate 240 and the second substrate 250 to define a cavity between the first substrate 240 and the second substrate 250.

In some examples, the distance between the first substrate 240 and the second substrate 250 is 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, or 100 µm, or within an interval between any two of the forementioned distances. In some examples, the distance between the first substrate 240 and the second substrate 250 is greater than 100 µm.

As shown in Figures 2A and 2B, in some configurations, the medium 220 is located in the cavity.

In some examples, the medium 220 includes one or more metal ions or structures. The metal ions can be transparent to certain wavelengths of light (e.g., visible, near-infrared, mid-infrared, etc.). Examples of metal ions include, but are not limited to, silver, copper, zinc, chromium, tin, nickel, palladium, gold, ruthenium, rhodium, and iron.

In some examples, the optical device is electrically coupled with an electrical source 260. The electrical source 260 may provide a voltage or current to the optical device (e.g., across or between the first electrode 210 and the second electrode 230). For example, In some examples, the first electrode 210 and the second electrode 230 are electrically coupled with the electrical source 260. In some examples, the optical device includes the electrical source 260. In some examples, the electrical source 260 is not part of the optical device.

As shown in Figures 2A and 2B, In some examples, the electrical source 260 includes one or more voltage sources 262 and 264. In some examples, the electrical source 260 includes one or more current sources 266. In some examples, the electrical source 260 includes one or more voltage sources 262 and 264 and one or more current sources 266. In some examples, the electrical source 260 includes one or more voltage sources 262 and 264 without one or more current sources 266. In some examples, the electrical source 260 includes one or more current sources 266 without one or more voltage sources 262 and 264.

In some examples, the electrical source 260 includes an electrical power storage (e.g., a battery or a capacitor).

As shown in Figures 2A and 2B, In some examples, the one or more current sources 266 are electrically connected in parallel to one or more impedances 268 (e.g., resistors). In some examples, one or more current sources are electrically connected in parallel.

As shown in Figures 2A and 2B, In some examples, the one or more voltage sources 262 and 264 are electrically connected in parallel (e.g., the voltage source 262 is electrically connected in parallel to the voltage source 264). In some examples, the one or more voltage sources 262 and 264 are electrically connected in series. In some examples, the one or more voltage sources 262 and 264 include a direct-current voltage source. In some examples, the one or more voltage sources 262 and 264 include an alternating-current voltage source (or a dynamic voltage source that provides voltages in a non-sinusoidal pattern). In some examples, the one or more voltage sources 262 and 264 include both a direct-current voltage source and an alternating-current voltage source (or a dynamic voltage source).

In some examples, the electrical source 260 provides a first electrical input V1 (e.g., a zero-voltage input or an electrical input below a predefined electrical threshold, such as a voltage threshold) across the first electrode 210 and the second electrode 230 at a first time. Such electrical input does not cause rearrangement of molecules or structures within the medium 220. As a result, the optical device may have a first set of scattering properties (and/or transmittance) as described with respect to Figure 2A.

In some examples, the electrical source 260 provides a second electrical input V2 (e.g., a non-zero voltage input or an electrical input above the predefined electrical threshold, such as the voltage threshold) across the first electrode 210 and the second electrode 230 at a second time. Such electrical input causes rearrangement of molecules or ions within the medium 220. As a result, the optical device may have a second set of scattering properties distinct from the first set of scattering properties as described with respect to Figure 2B.

Figure 2A shows the optical device in the first mode 200A of operation. In the first mode of operation, a zero-voltage electrical input (or an electrical input below a predefined voltage threshold) (V1) is provided across the first electrode 210 and the second electrode 230. Without application of a voltage above the threshold across the first electrode 210 and the second electrode 230, the metal ions 224 remain within the medium 220. In some configurations, there is no surface texturing or roughening present on either surface of the first electrode 210 or the second electrode 230 as shown in Figure 2A. As a result, the optical device in the first mode 200A is characterized by a first set of optical properties. The first set of optical properties can be associated with no or low absorption of light (or no or low color tint).

Figure 2B shows the optical device in the second mode 200B of operation. In the second mode of operation, a non-zero voltage electrical input (V2) (e.g., above a predefined voltage threshold) is provided across the first electrode 210 and the second electrode 230. The application of the non-zero voltage above the predefined threshold across the first electrode 210 and the second electrode 230 results in an electric field across the medium 220. The electric field causes the metal ions 224 to be electroplated to an exposed surface of one of the electrodes, depending upon the polarity of the voltage applied across the first electrode 210 and the second electrode 230.

In some examples, the non-zero voltage electrical input (V2) causes the metal ions to be electroplated on the exposed surface of the first electrode 210. The electroplating of the exposed surface of the first electrode 210 results in surface roughening and/or texturing. In some examples, the surface roughening and/or texturing is characterized by surface roughness features that are close to and/or larger than the wavelengths of visible light and/or near-infrared light (e.g., 400 nm, 500 nm, 800 nm, 1000 nm, etc.). In some examples, the surface roughness features include an amorphous layer of metal. In some examples, the surface roughness features include a crystalline (and/or faceted) layer of metal. As a result, the optical device 200 in the second mode 200B is characterized by a second set of optical properties. The second set of optical properties can be associated with high absorption of light (or a significant color tint).

In some examples, the electroplating of the exposed surface of the first electrode 210 is reversible. For example, In some examples, removal of the applied voltage across the first electrode 210 and the second electrode 230 causes the electroplated metal ions to disperse into the medium 220. In another example, application of a reverse biased voltage causes the electroplated metal ions to disperse into the medium 220. In some examples, application of different voltages (e.g., predetermined in value and time intervals, etc.) provides for reversible electroplating.

Figures 3A and 3B are schematic diagrams illustrating two modes 300A and 300B of operation for an optical device 300 (or a portion of the optical device that operates as a dimmable filter).

The optical device 300 includes an electrode 310, an electrode 330, a substrate 340, a substrate 350, and a medium 320 located in a cavity formed between the electrode 310 and the electrode 330. In some examples, the electrode 310, the electrode 330, the substrate 340, and the substrate 350 are analogous to the first electrode 210, the second electrode 230, the first substrate 240, and the second substrate 250 described above with respect to Figures 2A and 2B.

In some examples, the electrode 310 or the electrode 330 has a roughened surface 325. In some examples, each of the electrode 310 and the electrode 330 has a roughened surface. In some examples, the roughened surface 325 is a nanolithographically formed surface. In some other examples, the roughened surface 325 is fabricated via self-assembly techniques. The self-assembly based surface 325 can resemble a lotus leaf-like structure. In some examples, the roughened surface 325 includes surface roughness features that are close to and/or larger than the wavelengths of visible light and/or near-infrared light (e.g., 400 nm, 500 nm, 800 nm, 1000 nm, etc.). As a result, the roughened surface 325 is capable of causing scattering of visible light.

In some examples, the medium 320 includes one or more molecules or structures. In some examples, the medium 320 includes liquid crystals 324. In some examples, the liquid crystals are or include nematic liquid crystals (e.g., 4-cyano-4'-pentylbiphenyl, 4-pentyl-4'-cyanobiphenyl, HTW106700-100, or HFW59200-200). In some examples, the liquid crystals are or include twist-bend chiral nematic liquid crystals. In some examples, the liquid crystals are or include polymer dispersed liquid crystals.

In some examples, the optical device is electrically coupled with an electrical source 260. Similar to the electrical source 260 described with respect to Figures 2A and 2B, the electrical source 260 may provide a voltage or current to the optical device (e.g., across or between the electrode 310 and the electrode 330). For example, In some examples, the electrode 310 and the electrode 330 are electrically coupled with the electrical source 260. In some examples, the optical device includes the electrical source 260. In some examples, the electrical source 260 is not part of the optical device.

Figure 3A shows the optical device (or the optically dimmable filter) in a first mode 300A of operation. In some examples, the liquid crystals 324 in the medium 320 are arranged in a non-refractive-index-matching configuration. The non-refractive-index-matching configuration is based on the liquid crystals 324 being arranged randomly or in a directionally varying manner in response to application of one or more electrical inputs (e.g., a zero, a positive, or a negative potential with respect to the working electrodes).

The randomized or spatially varying arrangement of the liquid crystals 324 in the medium 320 results in a refractive index that does not match the refractive index of the roughened surface 325. This increases scattering effects at the interface of the roughened surface 325 and the medium 320 containing the liquid crystals 324.

In some examples, the randomized or spatially varying arrangement of the liquid crystals 324 results in cavitation (such as by physically breaking the refractive index continuity in the medium) that causes increased scattering. The increased scattering increases the opaqueness of the optically dimmable filter.

Figure 3B shows the first optically dimmable filter in a second mode 300B of operation. The second mode 300B of operation is based on application of one or more electrical inputs that provide a voltage across the electrode 310 and the electrode 330. In some examples, the liquid crystals 324 in the medium 320 are arranged in a refractive-index-matching configuration. For example, the refractive-index-matching configuration is associated with the liquid crystals 324 arranged in a directionally aligned manner in the medium (e.g., in a direction substantially perpendicular to the substrate 340 or the substrate 350). In some examples, alignment of the liquid crystals 324 in the refractive-index-matching configuration decreases scattering and reduces the opaqueness of the optically dimmable filter.

In some examples, the first optically dimmable filter includes (or is) a liquid crystal phase grating cell (e.g., a two-dimensional phase grating cell). In some examples, the liquid crystal phase grating cell includes a substrate with a patterned electrodes and liquid crystals. In some examples, the patterned electrodes include an electrode having a shape of an octothorp. In some examples, the patterned electrodes include two or more parallel electrodes. In some examples, the patterned electrodes include stacks of two or more parallel electrodes (e.g., a first layer of two or more parallel electrodes and a second layer of two or more parallel electrodes that are orthogonal to the two or more parallel electrodes of the first layer). In some examples, the liquid crystal phase grating cell provides optical diffraction that causes scattering-light distribution of light (e.g., hazing).

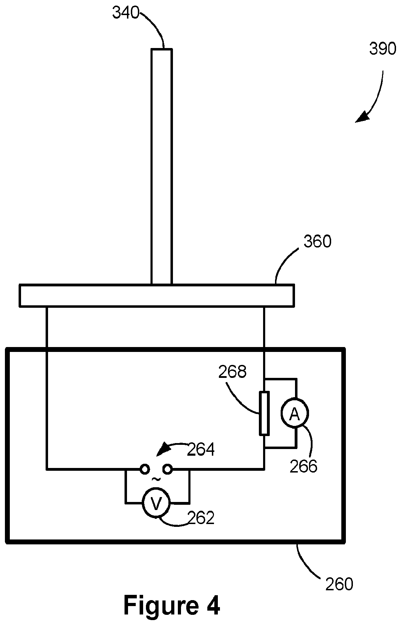

Figure 4 is a schematic diagram illustrating an optical device 390 (or a portion of the optical device that operates as a dimmable filter).

The optical device 390 includes the substrate 340 coupled with an acoustic source 360 coupled with the substrate 340. The acoustic source 360 provides acoustic waves that cause the substrate 340 to scatter light (e.g., Brillouin scattering in a crystalline quartz). In some examples, the acoustic source 360 includes a light source for generating the acoustic waves (e.g., photoacoustic waves). For example, a photoacoustic wave can be generated based on impinging the substrate with light periodically (modulated light) or as a single flash (pulsed light). The optical absorption of the impinged light results in thermal effects that contribute to the formation of sound waves. The sound waves increase scattering effects by causing refractive index variations to ripple through the substrate thereby increasing or decreasing an optical opaqueness of the corresponding region of the optically dimmable filter of the optical device.

Figures 5A and 5B are schematic diagrams illustrating optical devices. In Figures 5A and 5B, optical devices are illustrated in exploded views to show components of such optical devices with clarity.

The optical devices shown in Figures 5A and 5B include a first transparent electrode 510, a second transparent electrode 570, and a scattering region 520.

Figure 5A shows an optical device 500A with a single first optically dimmable filter 500A, which corresponds to an optical device 200, 300, or 390 described with respect to Figures 2A-2B, 3A-3B, and 4. The single first optically dimmable filter includes the first transparent electrode 510, the second transparent electrode 570 and the scattering region 520. In some examples, the sandwiched structure of the scattering region 520 between two transparent electrodes (e.g., first transparent electrode 510 and the second transparent electrode 570) encompasses the entire display region for the augmented reality device. Uniform modulation of the scattering properties associated with the display of the optical device with the single first optically dimmable filter is achievable when the first optically dimmable filter extends across a surface of the entire display region.

For example, this allows the first optically dimmable filter to adjust the scattering properties (and/or transmittance) across an aperture of the optical device. For example, the scattering properties of the optical device may be uniform across the entire aperture of the optical device.

In some other examples, the sandwiched scattering region 520 along with the two transparent electrodes can encompass a portion of the display region for the optical device. This allows the first optically dimmable filter to adjust the scattering properties (and/or transmittance) across a portion of an aperture of the optical device. For example, the scattering properties of the optical device will not be uniform across the entire aperture of the optical device. In some examples, the first optically dimmable filter extends substantially (e.g., at least 70%, 80%, 90%, or 95% but less than 100%) across a surface of the entire display region.

Figure 5B shows an optical device 500B, which includes an array of optically dimmable filters (e.g., corresponding to electrodes 510-1 and 510-2). Each dimmable filter may correspond to an optical device 200, 300, or 390 described with respect to Figures 2A-2B, 3A-3B, and 4. This allows the optical device 500B to adjust the scattering properties for only a portion, less than all, of the aperture of the optical device. For example, an optically dimmable filter corresponding to the electrode 510-1 may be turned on while the optically dimmable filter corresponding to the electrode 510-2 may be turned off so that regions corresponding to the optically dimmable filter corresponding to the electrode 510-1 and the optically dimmable filter corresponding to the electrode 510-2 have different scattering properties (and/or transmittances). In some examples, respective optically dimmable filters in the array of optically dimmable filters are independently activatable (e.g., a particular optically dimmable filter may be turned on or off independently of whether the rest of the optically dimmable filters are turned on or off).

In some examples, the optically dimmable filter corresponding to the electrode 510-1 can be turned on at a first voltage while the optically dimmable filter corresponding to the electrode 510-2 can be turned on at a second voltage, distinct from the first voltage as described with respect to Figures 2A-2B and 3A-3B. For example, the first voltage corresponds to a voltage for electroplating a portion of the metal ions present in the scattering region onto the surface of the electrode 510-1 and the second voltage corresponds to a voltage for electroplating substantially all of the metal ions present in the scattering region onto the electrode 510-2. This provides for tunable scattering properties that are controllable simultaneously and independently across at least a portion of the display region of the optical device.

In some examples, the array of optically dimmable filters are arranged as pixels across the aperture of the optical device. In some examples, each pixel has a shape of a square having a size of 1 mm × 1 mm, although the pixel may have a different size or shape (e.g., the pixel may be bigger or smaller, wider or narrower, taller or shorter, and may have a square shape, a non-square rectangular shape, or any other shape).

Although Figures 5A-5B illustrate optical devices with a single layer of one or more optically dimmable filters, In some examples, the optical device includes a stack of two or more optically dimmable filter layers.

Figures 6A and 6B illustrate an optical device 600 in two different states 600A and 600B. The optical device may be a wearable device that includes a display device 620.

Figure 6A illustrates the optical device 600 in the state 600A with local dimming. Local dimming involves blocking or reducing external light in certain regions or pixels, instead of blocking or reducing external light for the entire display. For example, while the optical device is in the state 600A, one or more optically dimmable filters associated with one or more regions (e.g., first pixel region 630, second pixel region 640, etc.) of the display device 620 are activated to provide local dimming. Local dimming preserves a largely-unobstructed view of the real world while enhancing the visibility of augmented reality content (e.g., information overlay 140 of Figure 1B) displayed over the one or more dimmed regions.

However, the local dimming causes the one or more regions of the display device 620 to appear opaque, thereby masking one or more portions of a wearer's eye 610 to those around the wearer.

Figure 6B illustrates the optical device 600 in the state 600B with a combination of local dimming and global dimming.

In some examples, the scattering parameters associated with the remaining regions 660 (e.g., the regions other than the locally dimmed regions, such as the first pixel region 630, the second pixel region 640, etc.) are modulated to make the transitions appear seamless and less distracting to the viewers (e.g., those around the wearer).

In some examples, scattering parameters for the remaining regions are modulated to reduce the contrast between the locally dimmed regions and the remaining regions (e.g., gradually transition the scattering parameters from high scattering values to low scattering values). In some examples, the scattering parameters for the remaining regions are selected based upon an intensity of environmental light, a wearer's movements, number or speed of informational overlay changes, and/or other environmental factors (e.g., time of day, current weather, whether wearer is interacting with others, etc.).

A similar strategy may be used with absorptive optical dimmers. For example, In some examples, a global tint with significantly high transmission than locally-dimmed regions, but with lower transmission than a fully transparent substrate is used to reduce the conspicuity of the locally-dimmed regions. Such change in the opacity of local regions can be noticeable to the wearer (in the form of improved augmented reality content visibility), but remain hidden from observers by the global tint. In some configurations, -10% global transmission renders local dimming unnoticeable. In some examples, <0.1% transmission is used.

In some examples, a combination of the scattering-based optical dimmers and the absorptive optical dimmers is used.

Additionally or alternatively, local dimming variations can be masked (while preserving the form of improved augmented reality content visibility for the wearer) by providing a global tint (e.g., providing a certain color) in addition to the local dimming.

In some examples, global optical dimming is based on a dynamic trigger that takes in to account an intensity of environmental light, a wearer's movements, number or speed of informational overlay changes, and/or other environmental factors.

In some examples, a single layer optical dimming device is used that reduces a visibility of local dimming by adding a surrounding region that provides global dimming (e.g., by modulating scattering and/or absorption parameters of the optical device).

In some other examples, a multilayer optical dimming device is used that is based on layering two or more dimming layers. For example, a first dimming layer can include an optically absorptive material to achieve an absorption based optical dimming filter. A second dimming layer can then be arranged over the first dimming layer. The second dimming layer can be based on modulated scattering (e.g., reflective) parameters as described with respect to the optically dimmable filters (or optical devices) of Figures 2A-2B, 3A-3B, 4, and 5A-5B.

As described above, In some examples, such modification of the display pattern is carried out using the pixelated optical dimming. In some other examples, such modification of the display pattern is carried out independently of optical dimming.

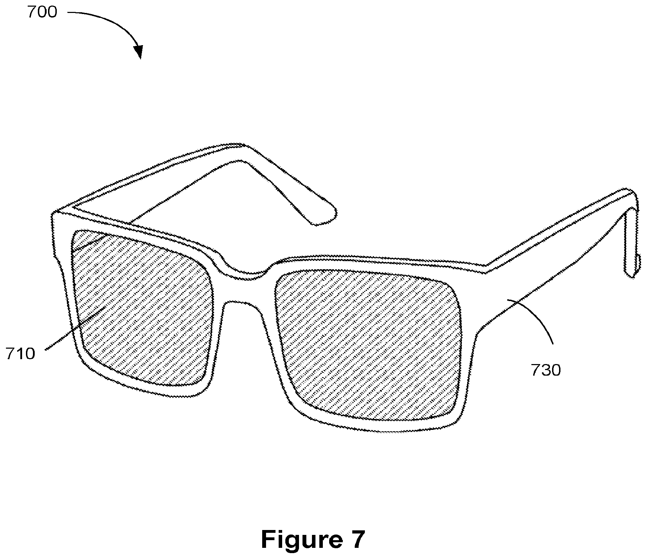

In some examples, an optical device described with respect to Figures 2A-2B, 3A-3B, 4, 5A-5B, and 6A-6B is used in display devices such as head-mounted display devices. In some examples, the optical device may be implemented as multifunctional optical components in near-eye displays for augmented reality ("AR"), virtual reality ("VR"), and/or mixed reality ("MR"). For example, the disclosed optical elements or devices may be implemented as optical dimming elements (e.g., variable intensity filters), etc., which may significantly reduce the weight and size, and enhance the optical performance of the head-mounted display devices. Examples of head-mounted display devices for implementing such optical devices are described with respect to Figures 7-9.

Figure 7 illustrates display device 700. In some examples, display device 700 is configured to be worn on a head of a user (e.g., by having the form of spectacles or eyeglasses, as shown in Figure 7) or to be included as part of a helmet that is to be worn by the user. When display device 700 is configured to be worn on a head of a user or to be included as part of a helmet, display device 700 is called a head-mounted display or a wearable display. Alternatively, display device 700 is configured for placement in proximity of an eye or eyes of the user at a fixed location, without being head-mounted (e.g., display device 700 is mounted in a vehicle, such as a car or an airplane, for placement in front of an eye or eyes of the user). As shown in Figure 7, display device 700 includes display 710. Display 710 is configured for presenting visual contents (e.g., augmented reality contents, virtual reality contents, mixed reality contents, or any combination thereof) to a user.

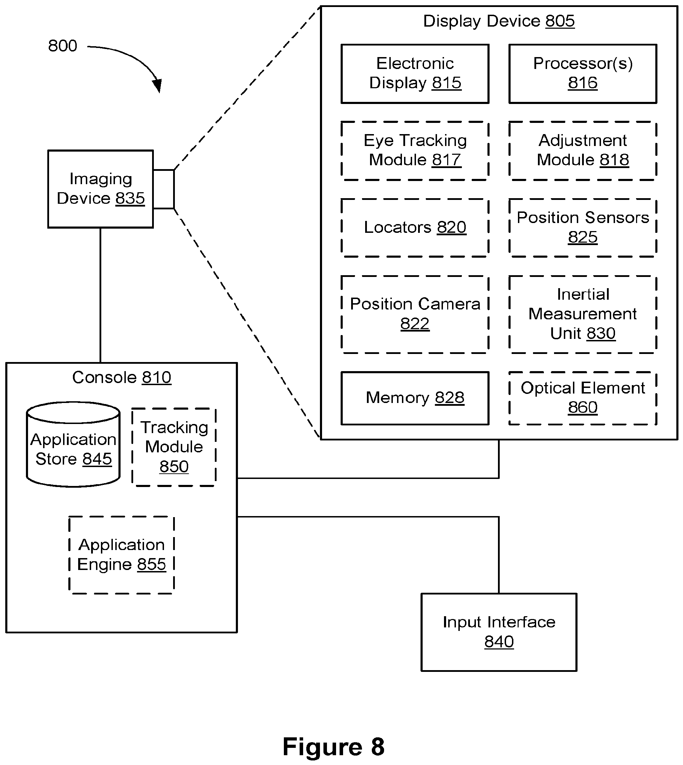

In some examples, display device 700 includes one or more components described herein with respect to Figure 8. In some examples, display device 700 includes additional components not shown in Figure 8.

Figure 8 is a block diagram of system 800. The system 800 shown in Figure 8 includes display device 805, imaging device 835, and input interface 840 that are each coupled to console 810. While Figure 8 shows an example of system 800 including one display device 805, imaging device 835, and input interface 840, in other examples, any number of these components may be included in system 800. For example, there may be multiple display devices 805 each having associated input interface 840 and being monitored by one or more imaging devices 835, with each display device 805, input interface 840, and imaging devices 835 communicating with console 810. In alternative configurations, different and/or additional components may be included in system 800. For example, In some examples, console 810 is connected via a network (e.g., the Internet or a wireless network) to system 800 or is self-contained as part of display device 805 (e.g., physically located inside display device 805). In some examples, display device 805 is used to create mixed reality by adding in a view of the real surroundings. Thus, display device 805 and system 800 described here can deliver augmented reality, virtual reality, and mixed reality.

In some examples, as shown in Figure 7, display device 805 is a head-mounted display that presents media to a user. Examples of media presented by display device 805 include one or more images, video, audio, or some combination thereof. In some examples, audio is presented via an external device (e.g., speakers and/or headphones) that receives audio information from display device 805, console 810, or both, and presents audio data based on the audio information. In some examples, display device 805 immerses a user in an augmented environment.

In some examples, display device 805 also acts as an augmented reality (AR) headset. In these examples, display device 805 augments views of a physical, real-world environment with computer-generated elements (e.g., images, video, sound, etc.). Moreover, In some examples, display device 805 is able to cycle between different types of operation. Thus, display device 805 operate as a virtual reality (VR) device, an augmented reality (AR) device, as glasses or some combination thereof (e.g., glasses with no optical correction, glasses optically corrected for the user, sunglasses, or some combination thereof) based on instructions from application engine 855.

Display device 805 includes electronic display 815, one or more processors 816, eye tracking module 817, adjustment module 818, one or more locators 820, one or more position sensors 825, one or more position cameras 822, memory 828, inertial measurement unit (IMU) 830, one or more optical elements 860 or a subset or superset thereof (e.g., display device 805 with electronic display 815, one or more processors 816, and memory 828, without any other listed components). Some examples of display device 805 have different modules than those described here. Similarly, the functions can be distributed among the modules in a different manner than is described here.

One or more processors 816 (e.g., processing units or cores) execute instructions stored in memory 828. Memory 828 includes high-speed random access memory, such as DRAM, SRAM, DDR RAM or other random access solid state memory devices; and may include non-volatile memory, such as one or more magnetic disk storage devices, optical disk storage devices, flash memory devices, or other non-volatile solid state storage devices. Memory 828, or alternately the non-volatile memory device(s) within memory 828, includes a non-transitory computer readable storage medium. In some examples, memory 828 or the computer readable storage medium of memory 828 stores programs, modules and data structures, and/or instructions for displaying one or more images on electronic display 815.

Electronic display 815 displays images to the user in accordance with data received from console 810 and/or processor(s) 816. In various examples, electronic display 815 may comprise a single adjustable display element or multiple adjustable display elements (e.g., a display for each eye of a user). In some examples, electronic display 815 is configured to display images to the user by projecting the images onto one or more optical elements 860.

In some examples, the display element includes one or more light emission devices and a corresponding array of spatial light modulators. A spatial light modulator is an array of electro-optic pixels, opto-electronic pixels, some other array of devices that dynamically adjust the amount of light transmitted by each device, or some combination thereof. These pixels are placed behind one or more lenses. In some examples, the spatial light modulator is an array of liquid crystal based pixels in an LCD (a Liquid Crystal Display). Examples of the light emission devices include: an organic light emitting diode, an active-matrix organic light-emitting diode, a light emitting diode, some type of device capable of being placed in a flexible display, or some combination thereof. The light emission devices include devices that are capable of generating visible light (e.g., red, green, blue, etc.) used for image generation. The spatial light modulator is configured to selectively attenuate individual light emission devices, groups of light emission devices, or some combination thereof. Alternatively, when the light emission devices are configured to selectively attenuate individual emission devices and/or groups of light emission devices, the display element includes an array of such light emission devices without a separate emission intensity array. In some examples, electronic display 815 projects images to one or more reflective elements 860, which reflect at least a portion of the light toward an eye of a user.

One or more lenses direct light from the arrays of light emission devices (optionally through the emission intensity arrays) to locations within each eyebox and ultimately to the back of the user's retina(s). An eyebox is a region that is occupied by an eye of a user located proximity to display device 805 (e.g., a user wearing display device 805) for viewing images from display device 805. In some cases, the eyebox is represented as a 10 mm × 10 mm square. In some examples, the one or more lenses include one or more coatings, such as anti-reflective coatings.

In some examples, the display element includes an infrared (IR) detector array that detects IR light that is retro-reflected from the retinas of a viewing user, from the surface of the corneas, lenses of the eyes, or some combination thereof. The IR detector array includes an IR sensor or a plurality of IR sensors that each correspond to a different position of a pupil of the viewing user's eye. In alternate examples, other eye tracking systems may also be employed. As used herein, IR refers to light with wavelengths ranging from 700 nm to 1 mm including near infrared (NIR) ranging from 750 nm to 1500 nm.

Eye tracking module 817 determines locations of each pupil of a user's eyes. In some examples, eye tracking module 817 instructs electronic display 815 to illuminate the eyebox with IR light (e.g., via IR emission devices in the display element).

A portion of the emitted IR light will pass through the viewing user's pupil and be retro-reflected from the retina toward the IR detector array, which is used for determining the location of the pupil. Alternatively, the reflection off of the surfaces of the eye is used to also determine location of the pupil. The IR detector array scans for retro-reflection and identifies which IR emission devices are active when retro-reflection is detected. Eye tracking module 817 may use a tracking lookup table and the identified IR emission devices to determine the pupil locations for each eye. The tracking lookup table maps received signals on the IR detector array to locations (corresponding to pupil locations) in each eyebox. In some examples, the tracking lookup table is generated via a calibration procedure (e.g., user looks at various known reference points in an image and eye tracking module 817 maps the locations of the user's pupil while looking at the reference points to corresponding signals received on the IR tracking array). As mentioned above, In some examples, system 800 may use other eye tracking systems than the embedded IR one described herein.

Adjustment module 818 generates an image frame based on the determined locations of the pupils. In some examples, this sends a discrete image to the display that will tile subimages together thus a coherent stitched image will appear on the back of the retina. Adjustment module 818 adjusts an output (i.e., the generated image frame) of electronic display 815 based on the detected locations of the pupils. Adjustment module 818 instructs portions of electronic display 815 to pass image light to the determined locations of the pupils. In some examples, adjustment module 818 also instructs the electronic display to not pass image light to positions other than the determined locations of the pupils. Adjustment module 818 may, for example, block and/or stop light emission devices whose image light falls outside of the determined pupil locations, allow other light emission devices to emit image light that falls within the determined pupil locations, translate and/or rotate one or more display elements, dynamically adjust curvature and/or refractive power of one or more active lenses in the lens (e.g., microlens) arrays, or some combination thereof.

Optional locators 820 are objects located in specific positions on display device 805 relative to one another and relative to a specific reference point on display device 805. A locator 820 may be a light emitting diode (LED), a corner cube reflector, a reflective marker, a type of light source that contrasts with an environment in which display device 805 operates, or some combination thereof. In examples where locators 820 are active (e.g., an LED or other type of light emitting device), locators 820 may emit light in the visible band (e.g., about 500 nm to 750 nm), in the infrared band (e.g., about 750 nm to 1 mm), in the ultraviolet band (about 100 nm to 500 nm), some other portion of the electromagnetic spectrum, or some combination thereof.

In some examples, locators 820 are located beneath an outer surface of display device 805, which is transparent to the wavelengths of light emitted or reflected by locators 820 or is thin enough to not substantially attenuate the wavelengths of light emitted or reflected by locators 820. Additionally, In some examples, the outer surface or other portions of display device 805 are opaque in the visible band of wavelengths of light. Thus, locators 820 may emit light in the IR band under an outer surface that is transparent in the IR band but opaque in the visible band.

IMU 830 is an electronic device that generates calibration data based on measurement signals received from one or more position sensors 825. Position sensor 825 generates one or more measurement signals in response to motion of display device 805. Examples of position sensors 825 include: one or more accelerometers, one or more gyroscopes, one or more magnetometers, another suitable type of sensor that detects motion, a type of sensor used for error correction of IMU 830, or some combination thereof. Position sensors 825 may be located external to IMU 830, internal to IMU 830, or some combination thereof.

Based on the one or more measurement signals from one or more position sensors 825, IMU 830 generates first calibration data indicating an estimated position of display device 805 relative to an initial position of display device 805. For example, position sensors 825 include multiple accelerometers to measure translational motion (forward/back, up/down, left/right) and multiple gyroscopes to measure rotational motion (e.g., pitch, yaw, roll). In some examples, IMU 830 rapidly samples the measurement signals and calculates the estimated position of display device 805 from the sampled data. For example, IMU 830 integrates the measurement signals received from the accelerometers over time to estimate a velocity vector and integrates the velocity vector over time to determine an estimated position of a reference point on display device 805. Alternatively, IMU 830 provides the sampled measurement signals to console 810, which determines the first calibration data. The reference point is a point that may be used to describe the position of display device 805. While the reference point may generally be defined as a point in space; however, in practice the reference point is defined as a point within display device 805 (e.g., a center of IMU 830).

In some examples, IMU 830 receives one or more calibration parameters from console 810. As further discussed below, the one or more calibration parameters are used to maintain tracking of display device 805. Based on a received calibration parameter, IMU 830 may adjust one or more IMU parameters (e.g., sample rate). In some examples, certain calibration parameters cause IMU 830 to update an initial position of the reference point so it corresponds to a next calibrated position of the reference point. Updating the initial position of the reference point as the next calibrated position of the reference point helps reduce accumulated error associated with the determined estimated position. The accumulated error, also referred to as drift error, causes the estimated position of the reference point to "drift" away from the actual position of the reference point over time.

Imaging device 835 generates calibration data in accordance with calibration parameters received from console 810. Calibration data includes one or more images showing observed positions of locators 820 that are detectable by imaging device 835. In some examples, imaging device 835 includes one or more still cameras, one or more video cameras, any other device capable of capturing images including one or more locators 820, or some combination thereof. Additionally, imaging device 835 may include one or more filters (e.g., used to increase signal to noise ratio). Imaging device 835 is configured to optionally detect light emitted or reflected from locators 820 in a field of view of imaging device 835. In examples where locators 820 include passive elements (e.g., a retroreflector), imaging device 835 may include a light source that illuminates some or all of locators 820, which retro-reflect the light towards the light source in imaging device 835. Second calibration data is communicated from imaging device 835 to console 810, and imaging device 835 receives one or more calibration parameters from console 810 to adjust one or more imaging parameters (e.g., focal length, focus, frame rate, ISO, sensor temperature, shutter speed, aperture, etc.).

In some examples, display device 805 optionally includes one or more optical elements 880 (e.g., lenses, reflectors, gratings, etc.). In some examples, electronic display device 805 includes a single optical element 860 or multiple optical elements 860 (e.g., an optical element 860 for each eye of a user). In some examples, electronic display 815 projects computer-generated images on one or more optical elements 860, such as a reflective element, which, in turn, reflect the images toward an eye or eyes of a user. The computer-generated images include still images, animated images, and/or a combination thereof. The computer-generated images include objects that appear to be two-dimensional and/or three-dimensional objects. In some examples, one or more optical elements 860 are partially transparent (e.g., the one or more optical elements 860 have a transmittance of at least 15%, 20%, 25%, 30%, 35%, 50%, 55%, or 50%), which allows transmission of ambient light. In such examples, computer-generated images projected by electronic display 815 are superimposed with the transmitted ambient light (e.g., transmitted ambient image) to provide augmented reality images.

In some examples, one or more optical elements 860, or a subset there of, are positioned to modify light (e.g., ambient light) transmitted to electronic display 815. For example, the one or more optical elements 860 may include an optical dimmer to selectively reduce the intensity of light passing through the optical dimmer. In some examples, optical elements 860 include an optical device described above with respect to Figures 2A-2B, 3A-3B, 4, 5A-5B, and 6A-6B.

Input interface 840 is a device that allows a user to send action requests to console 810. An action request is a request to perform a particular action. For example, an action request may be to start or end an application or to perform a particular action within the application. Input interface 840 may include one or more input devices. Example input devices include: a keyboard, a mouse, a game controller, data from brain signals, data from other parts of the human body, or any other suitable device for receiving action requests and communicating the received action requests to console 810. An action request received by input interface 840 is communicated to console 810, which performs an action corresponding to the action request. In some examples, input interface 840 may provide haptic feedback to the user in accordance with instructions received from console 810. For example, haptic feedback is provided when an action request is received, or console 810 communicates instructions to input interface 840 causing input interface 840 to generate haptic feedback when console 810 performs an action.

Console 810 provides media to display device 805 for presentation to the user in accordance with information received from one or more of: imaging device 835, display device 805, and input interface 840. In the example shown in Figure 8, console 810 includes application store 845, tracking module 850, and application engine 855. Some examples of console 810 have different modules than those described in conjunction with Figure 8. Similarly, the functions further described herein may be distributed among components of console 810 in a different manner than is described here.

When application store 845 is included in console 810, application store 845 stores one or more applications for execution by console 810. An application is a group of instructions, that when executed by a processor, is used for generating content for presentation to the user. Content generated by the processor based on an application may be in response to inputs received from the user via movement of display device 805 or input interface 840. Examples of applications include: gaming applications, conferencing applications, video playback application, or other suitable applications.

When tracking module 850 is included in console 810, tracking module 850 calibrates system 800 using one or more calibration parameters and may adjust one or more calibration parameters to reduce error in determination of the position of display device 805. For example, tracking module 850 adjusts the focus of imaging device 835 to obtain a more accurate position for observed locators on display device 805. Moreover, calibration performed by tracking module 850 also accounts for information received from IMU 830. Additionally, if tracking of display device 805 is lost (e.g., imaging device 835 loses line of sight of at least a threshold number of locators 820), tracking module 850 re-calibrates some or all of system 800.

In some examples, tracking module 850 tracks movements of display device 805 using second calibration data from imaging device 835. For example, tracking module 850 determines positions of a reference point of display device 805 using observed locators from the second calibration data and a model of display device 805. In some examples, tracking module 850 also determines positions of a reference point of display device 805 using position information from the first calibration data. Additionally, In some examples, tracking module 850 may use portions of the first calibration data, the second calibration data, or some combination thereof, to predict a future location of display device 805. Tracking module 850 provides the estimated or predicted future position of display device 805 to application engine 855.

Application engine 855 executes applications within system 800 and receives position information, acceleration information, velocity information, predicted future positions, or some combination thereof of display device 805 from tracking module 850. Based on the received information, application engine 855 determines content to provide to display device 805 for presentation to the user. For example, if the received information indicates that the user has looked to the left, application engine 855 generates content for display device 805 that mirrors the user's movement in an augmented environment. Additionally, application engine 855 performs an action within an application executing on console 810 in response to an action request received from input interface 840 and provides feedback to the user that the action was performed. The provided feedback may be visual or audible feedback via display device 805 or haptic feedback via input interface 840.

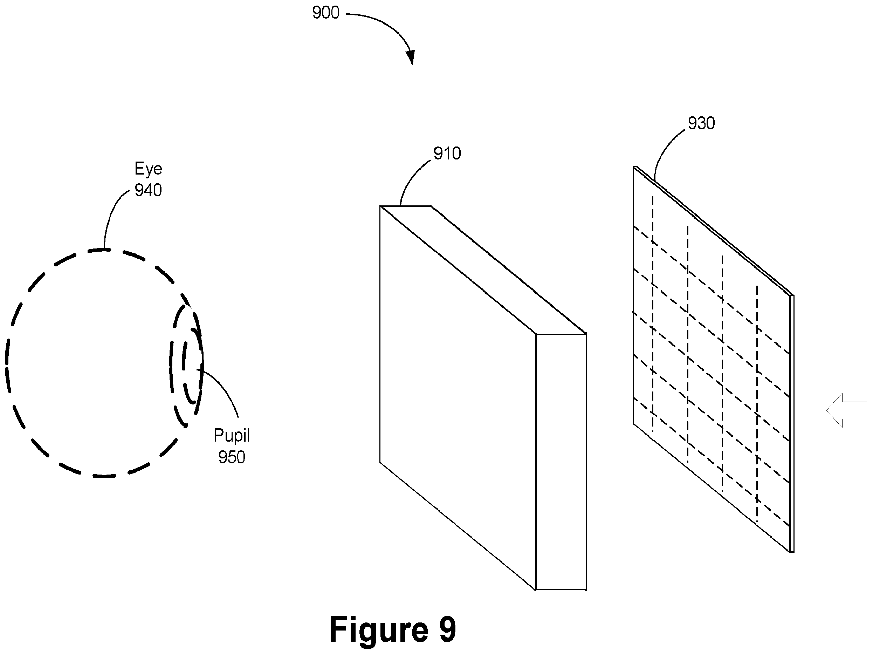

Figure 9 is an isometric view of display device 900. In some other examples, display device 900 is part of some other electronic display (e.g., a digital microscope, a head-mounted display device, etc.). In some examples, display device 900 includes light emission device 910 (e.g., a light emission device array) and an optical assembly 930, which may include one or more lenses and/or other optical components. In some examples, display device 900 also includes an IR detector array.

Light emission device 910 emits image light and optional IR light toward the viewing user. Light emission device 910 includes one or more light emission components that emit light in the visible light (and optionally includes components that emit light in the IR). Light emission device 910 may include, e.g., an array of LEDs, an array of microLEDs, an array of organic LEDs (OLEDs), an array of superluminescent LEDs (sLEDS) or some combination thereof.

In some examples, light emission device 910 includes an emission intensity array (e.g., a spatial light modulator) configured to selectively attenuate light emitted from light emission device 910. In some examples, the emission intensity array is composed of a plurality of liquid crystal cells or pixels, groups of light emission devices, or some combination thereof. Each of the liquid crystal cells is, or In some examples, groups of liquid crystal cells are, addressable to have specific levels of attenuation. For example, at a given time, some of the liquid crystal cells may be set to no attenuation, while other liquid crystal cells may be set to maximum attenuation. In this manner, the emission intensity array is able to provide image light and/or control what portion of the image light is transmitted. In some examples, display device 900 uses the emission intensity array to facilitate providing image light to a location of pupil 950 of eye 940 of a user, and minimize the amount of image light provided to other areas in the eyebox. In some examples, display device 900 includes, or is optically coupled with, electro-optic devices operating as a display resolution enhancement component. In some examples, display device 900 is an augmented reality display device. In such examples, display device 900 includes, or is optically coupled with, electro-optic devices operating as a waveguide-based combiner or as a polarization selective reflector.

In some examples, the display device 900 includes one or more lenses. The one or more lenses receive modified image light (e.g., attenuated light) from light emission device 910, and direct the modified image light to a location of pupil 950. The optical assembly may include additional optical components, such as color filters, mirrors, etc.

In some examples, the optical assembly 930 includes an optical device described above with respect to Figures 2A-2B, 3A-3C, 5A-5B, 6A-6B, and 6. The optical device has a variable transmittance (e.g., has a first transmittance curve at a first time and a second transmittance curve distinct from the first transmittance curve at a second time mutually exclusive from the first time). The optical device conditionally reduces intensity of light passing through the optical device. In some examples, the optical device has only a single window that has a uniform transmittance across the window at each time (e.g., the optical device operates as a single variable intensity filter). In some examples, the optical device has a plurality of regions, as shown in Figure 9, where each region may have a transmittance independent of transmittances of other regions. For example, the optical device may include an array of the structure shown in any of Figures 2A-2B, 3A-3C, 5A-5B, 6A-6B, and 6.

An optional IR detector array detects IR light that has been retro-reflected from the retina of eye 940, a cornea of eye 940, a crystalline lens of eye 940, or some combination thereof. The IR detector array includes either a single IR sensor or a plurality of IR sensitive detectors (e.g., photodiodes). In some examples, the IR detector array is separate from light emission device 910. In some examples, the IR detector array is integrated into light emission device 910.

In some examples, light emission device 910 including an emission intensity array make up a display element. Alternatively, the display element includes light emission device 910 (e.g., when light emission device 910 includes individually adjustable pixels) without the emission intensity array. In some examples, the display element additionally includes the IR array. In some examples, in response to a determined location of pupil 950, the display element adjusts the emitted image light such that the light output by the display element is refracted by one or more lenses toward the determined location of pupil 950, and not toward other locations in the eyebox.

In some examples, display device 900 includes one or more broadband sources (e.g., one or more white LEDs) coupled with a plurality of color filters, in addition to, or instead of, light emission device 910.

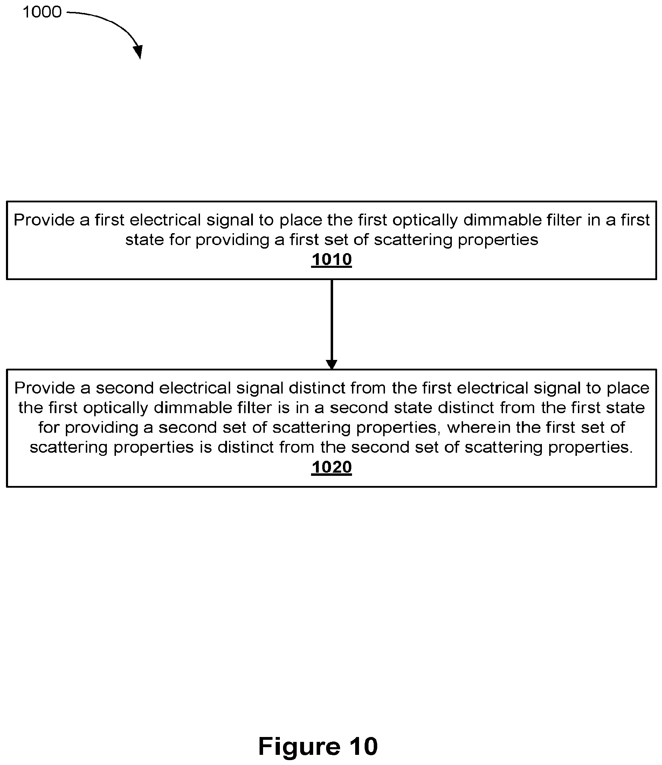

Figure 10 illustrates an example flow chart for a method 1000 for optical dimming. The method 1000 is performed by an electrical device coupled with an optically dimmable filter (e.g., optical device 700, an augmented reality device, and/or any other device described with respect to Figures 2A-2B, 3A-3C, 5A-5B, 6A-6B, and 6). In some examples, the electrical device includes one or more processors and memory storing instructions for execution by the one or more processors.

The method 1000 includes (1010) providing a first electrical signal to place the first optically dimmable filter in a first state for providing a first set of scattering properties (e.g., Figure 2A or 3A).

The method 1000 also includes (1020) providing a second electrical signal distinct from the first electrical signal to place the first optically dimmable filter is in a second state (e.g., Figure 2B or 3B) distinct from the first state for providing a second set of scattering properties. The first set of scattering properties is distinct from the second set of scattering properties.

In some examples, the first optically dimmable filter includes a first set of one or more electrodes, a second set of one or more electrodes distinct and separate from the first set of one or more electrodes, and an electrolyte containing metal ions that is located between the first set of one or more electrodes and the second set of one or more electrodes (e.g., metal ions 224).

In some examples, providing the first electrical signal causes electroplating of metal on at least one of: the first set of one or more electrodes or the second set of one or more electrodes so that the electroplated metal increases scattering of incident light (e.g., a transition from the state illustrated in Figure 2A to the state illustrated in Figure 2B), and providing the second electrical signal causes removal of the electroplated metal thereby reducing the scattering of the incident light (e.g., a transition from the state illustrated in Figure 2B to the state illustrated in Figure 2A). In some examples, the first electrical signal is provided between the first set of one or more electrodes and the second set of one or more electrodes. In some examples, the second electrical signal is provided between the first set of one or more electrodes and the second set of one or more electrodes.

In some examples, the first optically dimmable filter includes a substrate with a plurality of surface features (e.g., surface features 325). The plurality of surface features is characterized by a first refractive index. The first optically dimmable filter also includes a first set of one or more electrodes, a second set of one or more electrodes distinct and separate from the first set of one or more electrodes, and a medium (e.g., medium 320)having a second refractive index while the first optically dimmable filter is in a first state and a third refractive index distinct from the second refractive index while the first optically dimmable filter is in the second state. In some examples, the first refractive index is closer to the second refractive index than the third refractive index. In some examples, the first refractive index is identical to the second refractive index.

In some examples, providing the first electrical signal (e.g., between the first set of one or more electrodes and the second set of one or more electrodes) causes the plurality of surface features to scatter incident light by a first degree (e.g., Figure 3A), and providing the second electrical signal (e.g., between the first set of one or more electrodes and the second set of one or more electrodes) causes the plurality of surface features to scatter the incident light by a second degree less than the first degree (e.g., Figure 3B). In some examples, providing the second electrical signal causes the plurality of surface features to forego scattering of the incident light.

In some examples, the electrical device is coupled with an array of optically dimmable filters, including the first optically dimmable filter (e.g., Figure 5A).

In some examples, the optical device has three or more states, each state of which corresponding to a unique transmittance.

In light of these principles, we now turn to certain embodiments.

In accordance with some embodiments, an optical device (e.g., the optical device 700) includes a first optically dimmable filter (e.g., device 300) for providing a first set of scattering properties while the first optically dimmable filter is in a first state (e.g., mode 300B or an "off" state) and providing a second set of scattering properties distinct from the first set of scattering properties while the first optically dimmable filter is in a second state (e.g., mode 300A or an "on" state) distinct from the first state.

In some examples, a set of scattering properties includes at least one of: a scattering cross-section or a scattering anisotropy. In some examples, a set of scattering properties includes both a scattering cross-section and a scattering anisotropy.

In some examples, the first set of scattering properties includes a first scattering cross-section and the second set of scattering properties includes a second scattering cross-section that is distinct from the first scattering cross-section. In some examples, the second scattering cross-section is greater than the first scattering cross-section.

In some examples, the first set of scattering properties includes a first scattering anisotropy and the second set of scattering properties includes a second scattering anisotropy that is distinct from the first scattering anisotropy. In some examples, the second scattering anisotropy is greater than the first scattering anisotropy.

In some examples, the first optically dimmable filter includes a substrate (e.g., substrate 340) with a plurality of surface features that are characterized by a first refractive index, a first set of one or more electrodes (e.g., electrode 310), a second set of one or more electrodes (e.g., electrode 330), and a medium (e.g., medium 320) having a second refractive index while the first optically dimmable filter is in the second state and a third refractive index distinct from the second refractive index while the first optically dimmable filter is in the first state. The second set of one or more electrodes are distinct and separate from the first set of one or more electrodes. In some examples, the medium includes liquid crystals.

In some examples, the first refractive index is closer to the second refractive index than the third refractive index.

In some examples, the plurality of surface features is reflectively asymmetric with respect to any diagonal line of reflection (e.g., the plurality of surface features is not reflectively symmetric with respect to a line of reflection drawn along the substrate at 45 degrees from a horizontal plane perpendicular to the substrate). For example, In some examples, a respective surface feature of the plurality of surface features has a shape of a prism extending along a surface of the substrate (e.g., a triangular prism extending along a horizontal direction). Such anisotropic surface features (e.g., anisotropic nanostructures) result in a surface with different refractive indices along orthogonal axes (e.g., horizontal axis vs. vertical axis), which facilitates refractive-index matching with liquid crystals.

In some examples, the optical device further includes one or more processors (e.g., processor 816) coupled with the first optically dimmable filter for activating or deactivating the first optically dimmable filter, and memory (e.g., memory 828) storing instructions for execution by the one or more processors. The stored instructions including instructions for providing a first electrical signal between the first set of one or more electrodes and the second set of one or more electrodes at a first time to activate the first optically dimmable filter and providing a second electrical signal, distinct from the first electrical signal, between the first set of one or more electrodes and the second set of one or more electrodes at a second time, mutually exclusive to the first time, to deactivate the first optically dimmable filter.

In some examples, the plurality of surface features causes scattering of incident light by a first degree while the first optically dimmable filter is in the second mode (e.g., Figure 3A) and causes scattering of the incident light by a second degree less than the first degree while the first optically dimmable filter is in the first mode (e.g., Figure 3B).

In some examples, the first optically dimmable filter includes a liquid crystal phase grating cell.

In some examples, the first set of scattering properties includes a first scattering cross-section for a visible wavelength and a second scattering cross-section less than the first scattering cross-section for a near-infrared wavelength, and the second set of scattering properties includes a third scattering cross-section less than the first scattering cross-section for the visible wavelength and a fourth scattering cross-section substantially similar to the second scattering cross-section for the near-infrared wavelength. This allows the first optically dimmable filter to provide switchable scattering primarily for visible light. This, in turn, reduces scattering of infrared light, which may be useful in certain applications.

In some examples, the first set of scattering properties includes a first scattering cross-section for a visible wavelength and a second scattering cross-section greater than the first scattering cross-section for a near-infrared wavelength, and the second set of scattering properties includes a third scattering cross-section substantially similar to the first scattering cross-section for the visible wavelength and a fourth scattering cross-section less than the second scattering cross-section for the near-infrared wavelength. This allows the first optically dimmable filter to provide switchable scattering primarily for infrared light (e.g., near-infrared light). This reduces, without changing the user's view of the environment, specular reflection of infrared light off an eye, which may interfere with eye-tracking based on infrared light.

In some examples, the first set of scattering properties includes a first scattering cross-section for a visible wavelength and a second scattering cross-section for a near-infrared wavelength, and the second set of scattering properties includes a third scattering cross-section less than the first scattering cross-section for the visible wavelength and a fourth scattering cross-section less than the second scattering cross-section for the near-infrared wavelength. This allows the first optically dimmable filter to provide switchable scattering for both visible light and infrared light (e.g., near-infrared light).

In some examples, the optical device includes an array of optically dimmable filters (e.g., Figure 5A), including the first optically dimmable filter.

In some examples, each optically dimmable filter of the array of optically dimmable filters is independently activatable.

In some examples, the optical device further includes one or more processors (e.g., processor 816) coupled with the array of optically dimmable filters for activating or deactivating one or more optically dimmable filters of the array of optically dimmable filters, and memory (e.g., memory 828) storing instructions for execution by the one or more processors. The stored instructions including instructions for, in accordance with a determination that a subset, less than all, of the array of optically dimmable filters is in the first state, placing the rest of the optically dimmable filters of the array of optically dimmable filters in a third state (e.g., Figure 6B). For example, in accordance with a determination that one or more pixels have been dimmed, the one or more processors place the rest of the pixels in a semi-dimmed state.

In some examples, a respective optically dimmable filter of the array of optically dimmable filters provides a third set of scattering properties while the respective optically dimmable filter is in the third state, the respective optically dimmable filter in the first state provides a first transmittance (e.g., low transmittance caused by high scattering), the respective optically dimmable filter in the second state provides a second transmittance (e.g., high transmittance caused by low scattering) greater than the first transmittance, and the respective optically dimmable filter in the third state provides a third transmittance greater (e.g., medium transmittance caused by medium scattering) than the first transmittance. In some examples, the first transmittance, the second transmittance, or the third transmittance are total transmittance values (as compared to internal transmittance values) for the optical assembly 930.

In accordance with some embodiments, a wearable display device (e.g., 700) includes an optical device (e.g., optical assembly 930) and a display (e.g., light emission device 910) positioned to receive light transmitted through the optical device.

In some examples, the wearable display device includes the first optically dimmable filter with a first set of one or more electrodes, a second set of one or more electrodes, and an electrolyte containing metal ions. The electrolyte is located between the first set of one or more electrodes and the second set of one or more electrodes. The second set of one or more electrodes is distinct and separate from the first set of one or more electrodes.

In some examples, the first optically dimmable filter includes a substrate with a plurality of surface features that is characterized by a first refractive index, a first set of one or more electrodes, a second set of one or more electrodes distinct and separate from the first set of one or more electrodes, and a medium having a second refractive index while the first optically dimmable filter is in a first state and a third refractive index distinct from the second refractive index while the first optically dimmable filter is in the second state. In some examples, the first refractive index is closer to the second refractive index than the third refractive index.

In some examples, the wearable display device includes an array of optically dimmable filters, including the first optically dimmable filter; one or more processors coupled with the array of optically dimmable filters for activating or deactivating one or more optically dimmable filters of the array of optically dimmable filters; and memory storing instructions for execution by the one or more processors, the stored instructions including instructions for, in accordance with a determination that a subset, less than all, of the array of optically dimmable filters is in the first state, placing the rest of the optically dimmable filters of the array of optically dimmable filters in a third state. A respective optically dimmable filter of the array of optically dimmable filters provides a third set of scattering properties while the respective optically dimmable filter is in the third state. The respective optically dimmable filter in the first state provides a first transmittance. The respective optically dimmable filter in the second state provides a second transmittance greater than the first transmittance. The respective optically dimmable filter in the third state provides a third transmittance greater than the first transmittance and less than the second transmittance.

In some examples, the first optically dimmable filter includes a first set of one or more electrodes (e.g., electrode 210), a second set of one or more electrodes (e.g., electrode 230), and an electrolyte containing metal ions (e.g., metal ions 224) that is located between the first set of one or more electrodes and the second set of one or more electrodes. The second set of one or more electrodes is distinct and separate from the first set of one or more electrodes.

In some examples, the optical device further includes one or more processors (e.g., processor 816) coupled with the first optically dimmable filter for activating or deactivating the first optically dimmable filter, and memory (e.g., memory 828) storing instructions for execution by the one or more processors. The stored instructions include instructions for providing a first electrical signal between the first set of one or more electrodes and the second set of one or more electrodes at a first time to activate the first optically dimmable filter and providing a second electrical signal distinct from the first electrical signal between the first set of one or more electrodes and the second set of one or more electrodes at a second time, mutually exclusive to the first time, to deactivate the first optically dimmable filter. For example, In some examples, providing the first electrical signal places the first optically dimmable filter in the first state and providing the second electrical signal places the first optically dimmable filter in the second state. In some other embodiments, providing the first electrical signal places the first optically dimmable filter in the second state and providing the second electrical signal places the first optically dimmable filter in the first state.

Although head-mounted displays are illustrated as apparatus that include the described optical devices, such optical devices may be used in other systems, devices, and apparatus. For example, the optical devices described herein may be used in augmented reality devices and applications.

Terms, "and" and "or" as used herein, may include a variety of meanings that are also expected to depend at least in part upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein may be used to describe any feature, structure, or characteristic in the singular or may be used to describe some combination of features, structures, or characteristics. However, it should be noted that this is merely an illustrative example and claimed subject matter is not limited to this example. Furthermore, the term "at least one of" if used to associate a list, such as A, B, or C, can be interpreted to mean any combination of A, B, and/or C, such as A, AB, AC, BC, AA, ABC, AAB, AABBCCC, etc.

The terms "first state" and "second state" refer to different states, and do not indicate a particular sequence of the states or transitions. In addition, "first state" could be called "second state" and "second state" could be called "first state."

The methods, systems, and devices discussed above are examples. Various examples may omit, substitute, or add various procedures or components as appropriate. For instance, in alternative configurations, the methods described may be performed in an order different from that described, and/or various stages may be added, omitted, and/or combined. Also, features described with respect to certain examples may be combined in various other examples. Different aspects and elements of the examples may be combined in a similar manner. Also, technology evolves and, thus, many of the elements are examples that do not limit the scope of the disclosure to those specific examples.

Specific details are given in the description to provide a thorough understanding of the examples. However, embodiments may be practiced without these specific details. For example, well-known circuits, processes, systems, structures, and techniques have been shown without unnecessary detail in order to avoid obscuring the embodiments. This description provides examples only, and is not intended to limit the scope, applicability, or configuration of the invention. Rather, the preceding description of the examples will provide those skilled in the art with an enabling description for implementing various examples. Various changes may be made in the function and arrangement of elements without departing from the scope of the present disclosure.

Although various drawings illustrate operations of particular components or particular groups of components with respect to one eye, a person having ordinary skill in the art would understand that analogous operations can be performed with respect to the other eye or both eyes. For brevity, such details are not repeated herein.

Although some of various drawings illustrate a number of logical stages in a particular order, stages which are not order dependent may be reordered and other stages may be combined or broken out. While some reordering or other groupings are specifically mentioned, others will be apparent to those of ordinary skill in the art, so the ordering and groupings presented herein are not an exhaustive list of alternatives. Moreover, it should be recognized that the stages could be implemented in hardware, firmware, software or any combination thereof.

The foregoing description, for purpose of explanation, has been described with reference to specific examples. However, the illustrative discussions above are not intended to be exhaustive or to limit the scope of the claims to the precise forms disclosed. Many modifications and variations are possible in view of the above teachings. The examples were chosen in order to best explain the principles underlying the claims and their practical applications, to thereby enable others skilled in the art to best use the examples with various modifications as are suited to the particular uses contemplated.

## Claims

1. An optical device, comprising:
a first optically dimmable filter for providing a first set of scattering properties while the first optically dimmable filter is in a first state and providing a second set of scattering properties while the first optically dimmable filter is in a second state distinct from the first state, wherein the first set of scattering properties is distinct from the second set of scattering properties.

2. The device of claim 1, wherein:
the first optically dimmable filter includes:
a substrate with a plurality of surface features, wherein the plurality of surface features is **characterized by** a first refractive index;
a first set of one or more electrodes;
a second set of one or more electrodes distinct and separate from the first set of one or more electrodes; and
a medium having a second refractive index while the first optically dimmable filter is in a first state and a third refractive index distinct from the second refractive index while the first optically dimmable filter is in the second state, wherein the first refractive index is closer to the second refractive index than the third refractive index.

3. The device of claim 2, wherein:
the plurality of surface features is reflectively asymmetric with respect to any diagonal line of reflection.

4. The device of claim 2 or 3, wherein:
a respective surface feature of the plurality of surface features has a shape of a prism extending along a surface of the substrate.

5. The device of any of claims 2 to 4, further comprising:
one or more processors coupled with the first optically dimmable filter for activating or deactivating the first optically dimmable filter; and
memory storing instructions for execution by the one or more processors, the stored instructions including instructions for providing a first electrical signal between the first set of one or more electrodes and the second set of one or more electrodes at a first time to activate the first optically dimmable filter and providing a second electrical signal distinct from the first electrical signal between the first set of one or more electrodes and the second set of one or more electrodes at a second time mutually exclusive to the first time to deactivate the first optically dimmable filter.

6. The device of any of claims 2 to 5, wherein the plurality of surface features causes scattering of incident light by a first degree while the first optically dimmable filter is in the second mode and causes scattering of the incident light by a second degree less than the first degree while the first optically dimmable filter is in the first mode.

7. The device of any preceding claim, wherein:
the first optically dimmable filter includes a liquid crystal phase grating cell.

8. The device of any preceding claim, wherein the first set of scattering properties includes a first scattering cross-section for a visible wavelength and a second scattering cross-section less than the first scattering cross-section for a near-infrared wavelength, and the second set of scattering properties includes a third scattering cross-section less than the first scattering cross-section for the visible wavelength and a fourth scattering cross-section substantially similar to the second scattering cross-section for the near-infrared wavelength.

9. The device of any preceding claim, wherein the first set of scattering properties includes a first scattering cross-section for a visible wavelength and a second scattering cross-section greater than the first scattering cross-section for a near-infrared wavelength, and the second set of scattering properties includes a third scattering cross-section substantially similar to the first scattering cross-section for the visible wavelength and a fourth scattering cross-section less than the second scattering cross-section for the near-infrared wavelength.

10. The device of any preceding claim, wherein the first set of scattering properties includes a first scattering cross-section for a visible wavelength and a second scattering cross-section for a near-infrared wavelength, and the second set of scattering properties includes a third scattering cross-section less than the first scattering cross-section for the visible wavelength and a fourth scattering cross-section less than the second scattering cross-section for the near-infrared wavelength.

11. The device of any preceding claim, comprising:
an array of optically dimmable filters, including the first optically dimmable filter; preferably wherein each optically dimmable filter of the array of optically dimmable filters is independently activatable.

12. The device of claim 11, further comprising:
one or more processors coupled with the array of optically dimmable filters for activating or deactivating one or more optically dimmable filters of the array of optically dimmable filters; and
memory storing instructions for execution by the one or more processors, the stored instructions including instructions for, in accordance with a determination that a subset, less than all, of the array of optically dimmable filters is in the first state, placing the rest of the optically dimmable filters of the array of optically dimmable filters in a third state, wherein:
a respective optically dimmable filter of the array of optically dimmable filters provides a third set of scattering properties while the respective optically dimmable filter is in the third state;
the respective optically dimmable filter in the first state provides a first transmittance;
the respective optically dimmable filter in the second state provides a second transmittance greater than the first transmittance; and
the respective optically dimmable filter in the third state provides a third transmittance greater than the first transmittance and less than the second transmittance.

13. The device of any preceding claim, further comprising:
a second optically dimmable filter that includes:
a third set of one or more electrodes;
a fourth set of one or more electrodes distinct and separate from the third set of one or more electrodes; and
an electrolyte containing metal ions, wherein the electrolyte is located between the third set of one or more electrodes and the fourth set of one or more electrodes, wherein the second optically dimmable filter is positioned relative to the first optically dimmable filter so that the second optically dimmable filter receives light that has been transmitted through the first optically dimmable filter or the first optically dimmable filter receives light that has been transmitted through the second optically dimmable filter.

14. A wearable display device, comprising:
a display; and
the optical device of any preceding claim, wherein the display is positioned to receive light transmitted through the optical device.

15. A method performed by an electrical device that includes one or more processors and memory storing instructions for execution by the one or more processors and is coupled with a first optically dimmable filter, the method comprising:
providing a first electrical signal to place the first optically dimmable filter in a first state for providing a first set of scattering properties; and
providing a second electrical signal distinct from the first electrical signal to place the first optically dimmable filter is in a second state distinct from the first state for providing a second set of scattering properties, wherein the first set of scattering properties is distinct from the second set of scattering properties.
